# EUROPEAN PATENT APPLICATION

(11) **EP 4 340 161 A1**
(43) Date of publication of application: **20.03.2024**
(21) Application number: 22195569.3
(22) Date of filing: 14.09.2022
(51) Int. Cl.: H02J 7/00

(54) **BATTERY LIFE EXTENSION METHOD**

(71) Applicant: Trend Power Technology (Changshu) Inc., Jiangsu Province (CN)
(72) Inventor: CHUNG, Chih-Yu, 30348 Hukou Township, Hsinchu County (TW); CHANG, Fong-Ming, 30348 Hukou Township, Hsinchu County (TW); WU, Tsung-Nan, 30348 Hukou Township, Hsinchu County (TW)
(74) Representative: Zoli, Filippo

(57) **Abstract**

The battery pack with the plurality of batteries is determined to have been fully charged and set in a stationary state, the discharge operation proceeds according to specified relationships of the voltage of each battery, a first predetermined voltage difference, and a discharge starting voltage, or the balance operation proceeds according to specified relationships of the voltage of each battery, the first predetermined voltage difference, a balance starting voltage and a second predetermined voltage difference. The expected lifespans of batteries are prolonged whereby to decrease the stored voltage of each fully-charged battery and reduce the time storing of high-voltage electricity-saturation batteries

## Description

### BACKGROUND OF THE INVENTION

### Field of the Invention

The present invention relates to battery technologies, particularly to a battery life extension method.

### Description of the Prior Art

Rechargeable batteries may be connected in series and/or parallel to form a battery pack to meet requirements for different powers or voltages. However, the rechargeable batteries, which form the battery pack, may respectively have different characteristics owing to the process variation. For example, rechargeable batteries may differ in impedance, voltage, and power, and the differences may be significant after many cycles of charges and discharges. In other words, imbalance appears in the rechargeable batteries. If the rechargeable batteries keep being charged and discharged with imbalance persisting, the batteries having higher voltage will be charged to an excessive voltage, which may induce safety problems and obviously decrease the service life of the battery pack. Besides, in the case that the voltage of the transformer of the charging device is maintained at a constant value, if a rechargeable battery having been fully charged stays at a high-temperature and high-pressure electricity-saturation state, the service life of the rechargeable battery will be reduced.

### SUMMARY OF THE INVENTION

The objective of the present invention is to provide a battery life extension method to solve the conventional problem that a battery pack suffers shorter service life, which is induced by battery imbalance or the long-term high-temperature and high-pressure electricity-saturation state of rechargeable batteries.

To achieve the abovementioned objective, according to an aspect of the present invention. A battery life extension method comprising the following acts: continuously detecting a voltage of each of a plurality of batteries after a battery pack consisted of a plurality of batteries connected in series is determined that has been fully charged and set in a stationary state; setting a first difference from the difference between a highest voltage and a lowest voltage among the plurality of batteries; setting a second difference from the difference between the voltage of each of the plurality of batteries and the lowest voltage; performing a discharge operation until the lowest voltage is smaller than a discharge starting voltage if the first difference is smaller than a first predetermined voltage difference and the lowest voltage is greater than the discharge starting voltage are determined; and performing a balance operation until every second difference is smaller than a second predetermined voltage difference or until the lowest voltage is smaller than a balance starting voltage if the first difference is greater than the first predetermined voltage difference and that the lowest voltage is greater than the balance starting voltage are determined. The second predetermined voltage difference is smaller than the first predetermined voltage difference, and the discharge starting voltage is greater than the balance starting voltage.

According to another aspect of the present invention, a battery life extension method, comprising the following steps: continuously detecting a voltage of each of a plurality of batteries whenever a battery pack consisted of the plurality of batteries has been fully charged and set in a stationary state; and performing a balance operation until all of second differences of the plurality of batteries are smaller than a second predetermined voltage difference or until the lowest voltage is smaller than the balance starting voltage when a first difference of the plurality of batteries is greater than a first predetermined voltage difference and a lowest voltage is greater than a balance starting voltage. The first difference is a difference between a highest voltage and the lowest voltage among the plurality of batteries, each of the second differences is a difference between a voltage of each of the plurality of batteries and the lowest voltage, and the second predetermined voltage difference is smaller than the first predetermined voltage difference.

Accordingly, while the battery pack consisted of the plurality of batteries is determined to have been fully charged and set in a stationary state, the discharge operation proceeds according to specified relationships of the voltage of each battery, a first predetermined voltage difference, and a discharge starting voltage, or the balance operation is proceeding according to specified relationships of the voltage of each battery, the first predetermined voltage difference, a balance starting voltage and a second predetermined voltage difference. The expected lifespans of batteries are prolonged whereby to decrease the stored voltage of each fully-charged battery and reduce the time storing of high-voltage electricity-saturation batteries.

### BRIEF DESCRIPTION OF THE DRAWINGS

The drawings described herein are to enable the readers to further understand the present invention and form a portion of the present invention. The embodiments will be described with corresponding drawings to demonstrate the present invention and should not limit the scope of the present invention.
Fig.1 is a diagram schematically showing a battery device using the battery life extension method and charged by a charging device according to one embodiment of the present invention;
Fig.2 is a flowchart of a battery life extension method according to one embodiment of the present invention, wherein the method is used by the battery device in Fig.1;
Fig.3 is a diagram showing charge-discharge curves of all the batteries in a discharge operation according to one embodiment of the present invention;
Fig.4 is a diagram showing charge-discharge curves of all the batteries in a balance operation according to one embodiment of the present invention; and
Fig.5 is a flowchart of a battery life extension method according to another embodiment of the present invention.

### DETAILED DESCRIPTION OF THE INVENTION

The embodiments of the present invention will be demonstrated with corresponding drawings below.

Note that the term "comprise", "include", or the like used in the specification means the existence of special technical characteristics, values, methods, steps, operations, elements, and/or components; however, the term should not exclude additional technical characteristics, values, methods, steps, operations, elements, components, or combinations thereof.

Note that while a description states that an element is connected with or coupled to another element, the description may indicate that the element is directly connected with or coupled to another element, i.e., an intermediate element. Contrarily, when a description states that an element is directly connected with or directly coupled to another element, the description indicates that no intermediate element exists there between.

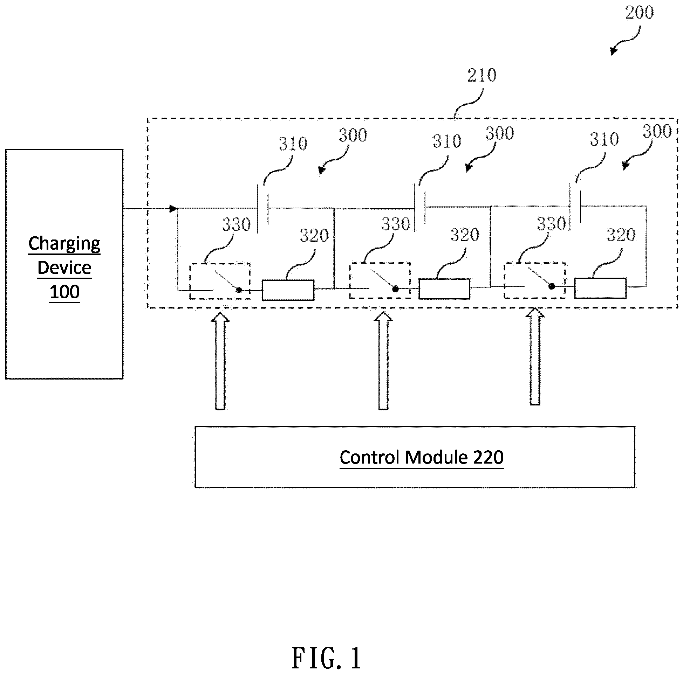

Refer to Fig.1. Fig.1 is a diagram schematically showing a battery device using the battery life extension method and charged by a charging device according to one embodiment of the present invention. In the embodiment, a charging device 100 is connected with a battery device 200 and provides power to charge the battery device 200. The battery device 200 comprises a battery pack 210 and a control module 220. The battery pack 210 comprises a plurality of battery modules 300. Each battery module 300 further comprises a battery 310, a balance resistor 320, and a switch 330. In each battery module 300, the battery 310 is connected in parallel with the balance resistor 320 through the switch 330. The control module 220 is used to detect the voltage of each battery 310 and turns on/off each switch 330 at appropriate timings to perform discharge operations or balance operations. The battery pack 210 may be a high-voltage power supply device applied in a large-size electromechanical apparatus, such as a vehicle. The battery pack 210 may be a low-voltage power supply device applied in a small-size electronic device, such as a portable electronic device. The battery 310 may be various types of rechargeable battery.

In the embodiment, the number of the battery modules 300 of the battery pack 210 may be but not limited to three. However, the present invention is not limited by the embodiment. In other words, the number of the battery modules 300 of the battery pack 210 may be adjusted according to practical requirements.

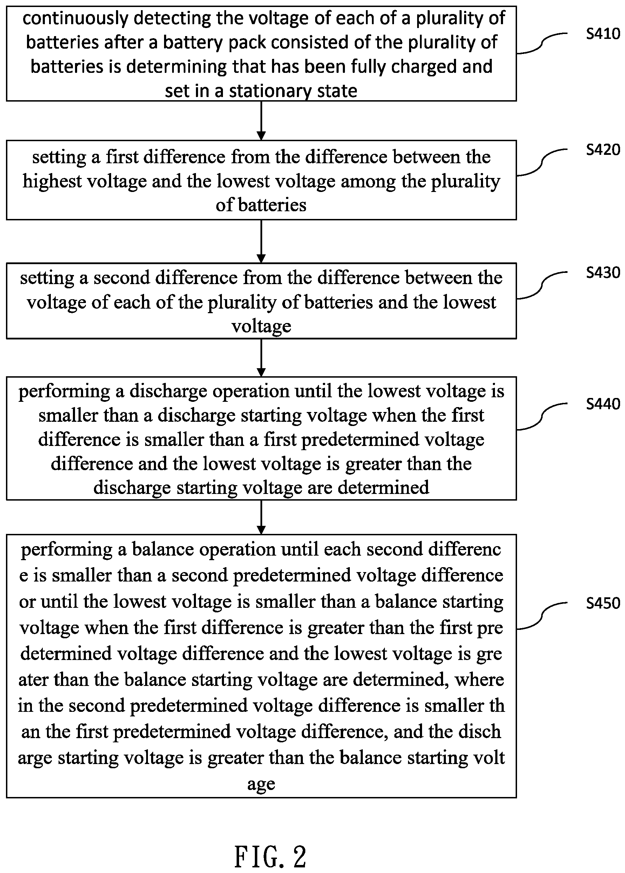

Refer to Fig.1 and Fig.2. Fig.2 is a flowchart of a battery life extension method according to one embodiment of the present invention, wherein the method is used by the battery device in Fig.1. In the embodiment, the battery life extension method is executed by the control module 220 and comprises the following steps: continuously detecting the voltage of each of a plurality of batteries 310 after a battery pack 210 consisted of the plurality of batteries 310 is determining that has been fully charged and set in a stationary state (Step 410); setting a first difference from the difference between the highest voltage and the lowest voltage among the plurality of batteries 310 (Step 420); setting a second difference from the difference between the voltage of each of the plurality of batteries 310 and the lowest voltage (Step 430); performing a discharge operation until the lowest voltage is smaller than a discharge starting voltage when the first difference is smaller than a first predetermined voltage difference and the lowest voltage is greater than the discharge starting voltage are determined (Step 440); performing a balance operation until each second difference is smaller than a second predetermined voltage difference or until the lowest voltage is smaller than a balance starting voltage when the first difference is greater than the first predetermined voltage difference and the lowest voltage is greater than the balance starting voltage are determined, wherein the second predetermined voltage difference is smaller than the first predetermined voltage difference, and the discharge starting voltage is greater than the balance starting voltage (Step 450).

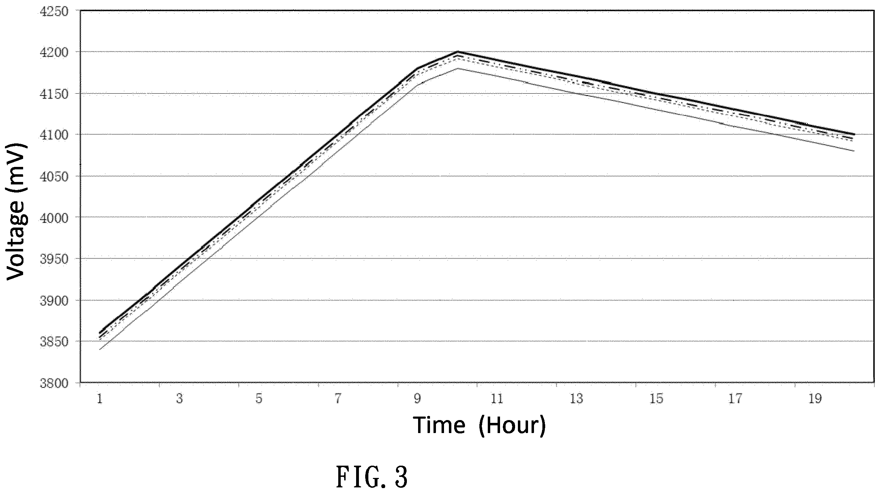

Refer to Fig.1 and Fig.3. Fig.3 is a diagram showing charge-discharge curves of all the batteries in a discharge operation according to one embodiment of the present invention. In Fig.3, the thick line represents the charge-discharge curve of the first battery 310 in Fig.1 (i.e., the leftest battery 310 in Fig.1); the dot-dot-dash line represents the charge-discharge curve of the second battery 310 in Fig.1 (i.e., the battery 310 adjacent to the leftest battery 210 in Fig.1); the thin line represents the charge-discharge curve of the third battery 310 in Fig.1 (i.e., the rightest battery 310 in Fig.1); and the dotted line represents the curve of the average voltage of three batteries in Fig.1. In the embodiment, when the control module 220 determines that the first difference is smaller than the first predetermined voltage difference and that the lowest voltage is greater than the discharge starting voltage according to the voltages of all the batteries 310 continuously detected, the control module 220 turns on all the switches 330 to perform a discharge operation. Thereby, each battery 310 discharges through the balance resistor 330 connected in parallel thereto until the lowest voltage among the three batteries 310 is smaller than the discharge starting voltage. Then, the control module 220 turns off all the switches 330 to terminate the discharge operation. The battery 310 may be but is not limited to be a lithium-based battery; the first predetermined voltage difference may be but is not limited to be 75mV; the discharge starting voltage may be but is not limited to be 4075mV. The values of the first predetermined voltage difference and the discharge starting voltage may be adjusted according to the type of the batteries and the practical requirement.

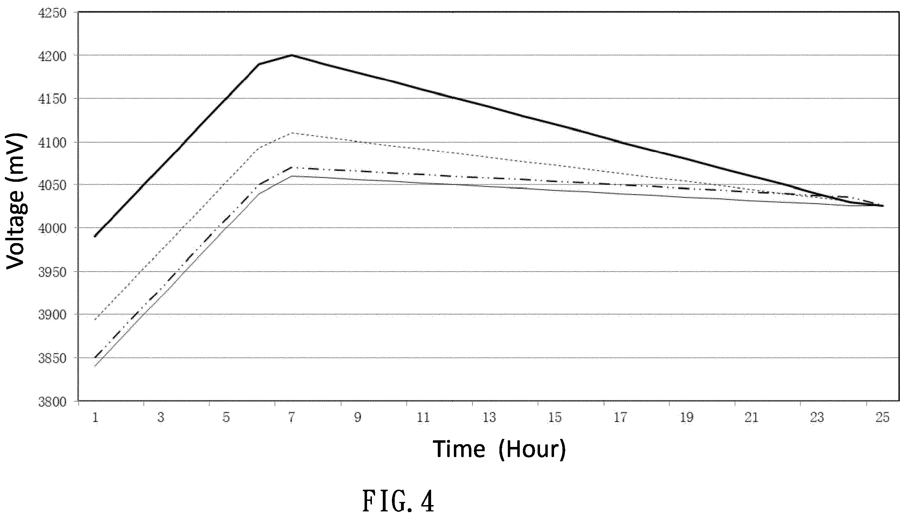

Refer to Fig.1 and Fig.4. Fig.4 is a diagram showing charge-discharge curves of all the batteries in a balance operation according to one embodiment of the present invention. In Fig.4, the thick line represents the charge-discharge curve of the first battery 310 in Fig.1 (i.e., the leftest battery 310 in Fig.1); the dot-dot-dash line represents the charge-discharge curve of the second battery 310 in Fig.1 (i.e., the battery 310 adjacent to the leftest battery 210 in Fig.1); the thin line represents the charge-discharge curve of the third battery 310 in Fig.1 (i.e., the rightest battery 310 in Fig.1); the dotted line represents the curve of the average voltage of three batteries in Fig.1. In the embodiment, when the control module 220 determines that the first difference is greater than the first predetermined voltage difference and that the lowest voltage is greater than the balance starting voltage according to the voltages of all the batteries 310 continuously detected, the control module 220 performs a balance operation until the control module 220 determines that each second difference is smaller than the second predetermined voltage difference or that the lowest voltage is smaller than the balance starting voltage. Wherein the second predetermined voltage difference is smaller than the presser first difference; the discharge starting voltage is greater than the balance starting voltage; the second predetermined voltage difference may be but is not limited to be 50mV; the balance starting voltage may be but is not limited to be 3925mV. The values of the second predetermined voltage difference and the balance starting voltage may be adjusted according to the type of the batteries and the practical requirement.

In detail, the balance operation comprises the following steps: turning on the switches 330 connected in parallel with the corresponding batteries 310 having the second differences greater than the first predetermined voltage difference, to make the abovementioned batteries 310 discharge through the paralleled-connected balance resistors 320 , and continuously detecting whether each of the second differences is smaller than the second predetermined voltage difference; turning off all the turned-on switches 330 connected in parallel with the corresponding batteries 310 when the second difference of any of the plurality of batteries 310 is smaller than the second predetermined voltage difference.

In other words, while performing a balance operation, the control module 220 may turn on a portion of/all of the switches 330. While each of the second differences is smaller than the second predetermined voltage difference or the lowest voltage is smaller than the balance starting voltage, the control module 220 turns off all the turned-on switches 330 to terminate the balance operation.

The battery life extension method of the embodiment may further comprise the following step: terminating the discharge operation or the balance operation if the control module 220 detects that the battery pack 210 is being charged or discharged during a discharge operation or a balance operation. In other words, the control module 220 turns off all the switches 330 to terminate the discharge operation or the balance operation if the control module 220 detects that the battery pack 210 is being charged or discharged during a discharge operation or a balance operation. Note that in the present invention, discharging of the battery pack 210 is that the battery pack 210 provides power for an external load; the discharge operation is that the control module 220 turns on the switches 330 to let the batteries 310 of the battery pack 210 discharge through the paralleled-connected balance resistors 320 (i.e., release the electric energy through the balance resistors 320) to decrease the voltages of the batteries where electricity is stored in a saturation state; the balance operation is that the control module 220 turns on the switches 330, to make the batteries 310 of the battery pack 210 discharge through the paralleled-connected balance resistors 320 (i.e., release the electric energy through the balance resistors 320) to balance the voltages of all the batteries 310 of the battery pack 210.

In one embodiment, Step 410 (a battery pack 210 consisted of a plurality of batteries 310 is determined to have been fully charged and set in a stationary state) further comprises the following step: a holding time period of the battery pack 210 having been fully charged and set in the stationary state is greater than a determined time period. The holding time period represents the total voltage or the average voltage of the battery pack 210 is greater than the determined voltage. The average voltage of the battery pack 210 is the average of the voltages of all the batteries 310 of the battery pack 210. The determined voltage and the determined time period may be adjusted according to practical requirements.

In one embodiment, the battery device 200 using the battery life extension method shown in Fig.2 may be installed in an uninterruptible power supply (UPS) system. After the battery pack 210 is fully charged, the present invention may perform a discharge operation, lest the batteries 310 stay in a high-temperature and high-pressure electricity-saturation state for a long time; or perform a balance operation, lest imbalance occurs among the plurality of batteries 310. Thus, the service life of the battery pack 210 is extended, and the maintenance cost of the UPS system is reduced.

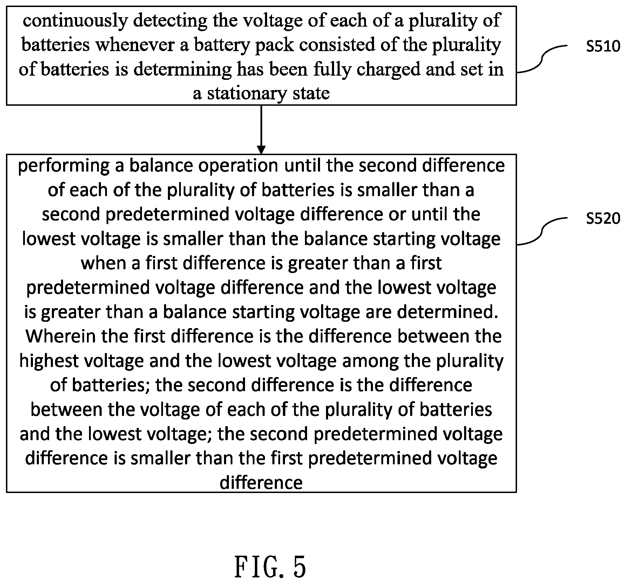

Refer to Fig.1 and Fig.5. Fig.5 is a flowchart of a battery life extension method according to another embodiment of the present invention. In the embodiment, the battery life extension method is executed by the control module 220 and comprises the following steps: continuously detecting the voltage of each of a plurality of batteries 310 whenever a battery pack 210 consisted of the plurality of batteries 310 is determining has been fully charged and set in a stationary state (Step 510); performing a balance operation until the second difference of each of the plurality of batteries 310 is smaller than a second predetermined voltage difference or until the lowest voltage is smaller than the balance starting voltage when a first difference is greater than a first predetermined voltage difference and the lowest voltage is greater than a balance starting voltage are determined, wherein the first difference is the difference between the highest voltage and the lowest voltage among the plurality of batteries 310; the second difference is the difference between the voltage of each of the plurality of batteries 310 and the lowest voltage; the second predetermined voltage difference is smaller than the first predetermined voltage difference (Step 520).

According to the abovementioned steps, the present invention performs a balance operation for the plurality of the batteries 310 of the battery pack 210 whenever the battery pack 210 has been fully charged and set in a stationary state. Thereby, after many cycles of charges and discharges, the plurality of the batteries 310 of the battery pack 210 are still maintained in a balanced state. Thus, the service life of the battery pack 210 is extended.

In one embodiment, the balance operation comprises the following steps: turning on the switches 330 connected in parallel with the corresponding batteries 310 having the second differences greater than the first predetermined voltage difference, to make the abovementioned batteries 310 discharge through the paralleled-connected balance resistors 320, and continuously detecting whether each of the second differences is smaller than the second predetermined voltage difference; turning off the switches connected in parallel with the corresponding batteries 310 when the second difference of any of the plurality of batteries 310 is smaller than the second predetermined voltage difference. The details have been described above and will not repeat herein.

In one embodiment, the completion of charging the battery pack 210 consisted of the plurality of batteries 310 is determined under the total voltage or average voltage of the battery pack 210 is greater than a determined voltage. Wherein the determined voltage may be adjusted according to practical requirements.

In conclusion, with the battery life extension method of the present invention, after a battery pack consisted of a plurality of batteries has been fully charged and set in a stationary state, a discharge/balance operation is performed according to the relationships between the voltage of each battery, a first predetermined voltage difference, a discharge starting voltage and/or a balance starting voltage, and a second predetermined voltage difference. Thereby, the voltage of each stored electricity-saturation battery is reduced, and the time of storing high-voltage electricity-saturation batteries is decreased. Therefore, the service life of each battery is extended.

Although the drawings in the specification of the present invention have included the abovementioned elements, the present invention may further include additional elements as long as the addition does not depart from the spirit of the present invention.

The embodiments described above are only to exemplify the present invention but not to limit the scope of the present invention. Contrarily, the scope of the present invention covers modifications or variations that can be obviously easily made by the persons skilled in the art according to the technical contents disclosed in the specification and claims. Therefore, the claims of the present invention should be interpreted in the broadest sense and include all the obviously-easy modifications and variations.

## Claims

1. A battery life extension method, comprising acts of:
continuously detecting a voltage of each of a plurality of batteries after a battery pack consisted of the plurality of batteries connected in series is determined that has been fully charged and set in a stationary state;
setting a first difference from the difference between a highest voltage and a lowest voltage among the plurality of batteries;
setting a second difference from the difference between the voltage and the lowest voltage;
performing a discharge operation until the lowest voltage is smaller than a discharge starting voltage when the first difference is smaller than a first predetermined voltage difference and the lowest voltage is greater than the discharge starting voltage are determined; and
performing a balance operation until every second difference is smaller than a second predetermined voltage difference or until the lowest voltage is smaller than a balance starting voltage when the first difference is greater than the first predetermined voltage difference and the lowest voltage is greater than the balance starting voltage are determined, wherein
the second predetermined voltage difference is smaller than the first predetermined voltage difference, and the discharge starting voltage is greater than the balance starting voltage.

2. The battery life extension method according to claim 1, wherein the determination of the battery pack consisted of the plurality of batteries that has been fully charged and set in the stationary state comprises
a holding time period of a total voltage or an average voltage of the battery pack that has been fully charged and set in the stationary state is greater than a determined time period.

3. The battery life extension method according to claim 1, further comprising an act of:
terminating the discharge operation or the balance operation if the battery pack is determined in charging or in discharging during the discharge operation or the balance operation.

4. The battery life extension method according to claim 1, wherein each of the plurality of batteries is connected in parallel with a balance resistor through a switch, and the discharge operation comprises:
turning ON all the switches to make the plurality of batteries discharge through the paralleled-connected balance resistors.

5. The battery life extension method according to claim 1, wherein each of the plurality of batteries is connected in parallel with a balance resistor through a switch, and the balance operation comprises:
turning ON the switches connected in parallel with the batteries having the second differences greater than the first predetermined voltage difference to discharge through the parallel-connected balance resistors, and continuously detecting whether each of the second differences is smaller than the second predetermined voltage difference; and
turning OFF all the switches connected in parallel with the battery when any second difference of the plurality of batteries is smaller than the second predetermined voltage difference.

6. A battery life extension method, comprising acts of:
continuously detecting a voltage of each of a plurality of batteries whenever a battery pack consisted of the plurality of batteries has been fully charged and set in a stationary state; and
performing a balance operation until all of second differences of the plurality of batteries are smaller than a second predetermined voltage difference or until the lowest voltage is smaller than the balance starting voltage when a first difference of the plurality of batteries is greater than a first predetermined voltage difference and a lowest voltage is greater than a balance starting voltage;
wherein the first difference is a difference between a highest voltage and the lowest voltage among the plurality of batteries, each of the second differences is a difference between a voltage of each of the plurality of batteries and the lowest voltage, and the second predetermined voltage difference is smaller than the first predetermined voltage difference.

7. The battery life extension method according to claim 6, further comprising an act of:
terminating the balance operation if the battery pack is determining in charging or in discharging during the balance operation.

8. The battery life extension method according to claim 6, wherein each of the plurality of batteries is connected in parallel with a balance resistor through a switch, and the balance operation comprises:
turning ON the switches connected in parallel with the batteries having the second differences greater than the first predetermined voltage difference to discharge through the parallel-connected balance resistors, and continuously detecting whether each of the second differences is smaller than the second predetermined voltage difference; and
turning OFF the switch connected in parallel with the battery when the second difference of any of the plurality of batteries is smaller than the second predetermined voltage difference.

9. The battery life extension method according to claim 6, wherein the completion of charging the battery pack consisted of the plurality of batteries is determined under a total voltage or an average voltage of the battery pack is greater than a determined voltage.
